# EUROPÄISCHE PATENTSCHRIFT

(11) **EP 1 493 602 B1**
(45) Veröffentlichungstag und Bekanntmachung des Hinweises auf die Patenterteilung: **02.07.2008**
(21) Anmeldenummer: 04015095.5
(22) Anmeldetag: 28.06.2004
(51) Int. Cl.: B60J 7/02

(54) **Gleitbacke für verstellbare Fahrzeugteile**
Sliding shoe for adjustable vehicle parts
Patin pour parties de véhicule

(30) Priorität: 30.06.2003 DE 10329390
(43) Veröffentlichungstag der Anmeldung: 05.01.2005
(73) Patentinhaber: Webasto AG, 82131 Stockdorf (DE)
(72) Erfinder: Dittrich, Wolfgang, 82205 Gilching (DE); Ettl, Wolfgang, 82166 Gräfelfing (DE)

(56) Entgegenhaltungen:
- DE-A1- 10 057 012
- DE-C1- 19 930 365

## Beschreibung

Die vorliegende Erfindung betrifft eine Gleitbacke gemäß dem Oberbegriff von Anspruch 1.

Bei Fahrzeugdächern mit beweglichem Deckel kann insbesondere bei höheren Fahrgeschwindigkeiten das Problem auftreten, dass aufgrund eines hohen Unterdrucks (Windlast) auf den Deckel der Deckel nach oben über das Niveau der Dachhaut angehoben wird, was zu Geräuschen und Funktionsstörungen führen kann. Um diesem Problem zu begegnen wurde vorgeschlagen, an den zum Führen des Deckels in dachfesten Führungsschienen vorgesehenen Gleitern Gleitbacken vorzusehen, in welchen ein Dämpfer unterhalb des Gleitbackenträgers angeordnet ist. Damit ist gewährleistet, dass der Bereich oberhalb einer Aufnahme für den Gleitbackenträger vergleichsweise starr und somit nicht federnd ist. Der Bereich unterhalb der Aufnahme ist elastisch und kann so Toleranzen der Führungsschiene beziehungsweise unterschiedliche Wölbungen einer Führungsschiene kompensieren. Wäre der Bereich der Gleitbacke oberhalb der Aufnahmelasche ebenfalls elastisch, so würde das resultierende Anheben des Deckels durch Kräfte nach oben in Geräuschen und Funktionsstörungen resultieren.

Eine derartige Gleitbacke ist beispielsweise aus der gattungsgemäßen DE 199 30 365 C1 bekannt. Bei der dort offenbarten Gleitbacke ist ein Gleitkörper direkt an einen Gleitbackenträger angespritzt. Dabei ist ein relativ harter Gleitkörper vorgesehen, in den ein weicherer Dämpferkörper eingespritzt wird. Der weichere Dämpferkörper bildet im Bereich der Gleitflächen der Gleitbacke gewissermaßen eine nachgiebige Einlage im härteren Gleitkörper. Es handelt sich damit um einen einteiligen Gleitbackenträger in Gestalt eines festen Verbunds aus Trägerblech, Gleitkörper und Dämpferkörper.

Nachteilig an dieser beschriebenen Gleitbacke ist jedoch, dass durch das Anspritzen des Gleitkörpers an den Gleitbackenträger kompliziertere Geometrien des Gleitkörpers nur schwer realisierbar sind. Insbesondere ist es zuweilen wünschenswert, dass ein solcher Gleitkörper beispielsweise Abstreifvorrichtungen aufweist, die dazu dienen, Beeinträchtigungen durch in die Führungsschiene eindringende Fremdstoffe wie Staub, Sand und dergleichen, auszuräumen oder zumindest wesentlich zu reduziert. Außerdem unterstützen sie ein leichteres, geräusch- und verschleißärmeres Gleiten der Gleitbacke in den Führungsschienen. Solche Abstreifelemente sind in der DE 38 17 391 C1 in Form einer Abstreiflippe sowie in der DE 43 36 222 C1 in Form schräg verlaufenden Rippen gezeigt.

Ein weiterer Nachteil der in der DE 199 30 365 C1 offenbarten Gleitbacke sind die Schwierigkeiten beim Austauschen von Gleitkörper und/oder Dämpfer, wie er durch Verschleiß während des Betriebs notwendig werden kann. Da, wie oben beschrieben, diese Teile direkt an den Gleitbackenträger angespritzt sind, ist ein solches Auswechseln dieser Verschleißteile nicht möglich.

Angesichts dieses Standes der Technik liegt der vorliegenden Erfindung die Aufgabe zugrunde, eine Gleitbacke der im Oberbegriff des Anspruchs 1 genannten Art zu schaffen, bei der kompliziertere Geometrien des Gleitkörpers realisiert werden können und bei der ferner die Wartung beziehungsweise das Auswechseln von Verschleißteilen wie zum Beispiel des Gleitkörpers einfach und kostengünstig möglich ist. Außerdem sollen die Fertigungskosten für eine solche Gleitbacke reduziert werden.

Diese Aufgabe wird erfindungsgemäß gelöst durch eine Gleitbacke gemäß Anspruch 1.

Bei der erfindungsgemäßen Lösung ist vorteilhaft, dass der Gleitkörper und der Dämpfer der Gleitbacke nicht direkt an den Gleitbackenträger angespritzt werden, sondern diese Teile separat gefertigt werden, und deshalb bei der Ausgestaltung der Form beispielsweise des Gleitkörpers wesentlich kompliziertere Strukturen realisiert werden können. Damit können z.B. Abstreifvorrichtungen für Schmutz und Staub direkt an den Gleitkörper angeformt werden. Bekannte Ausführungsformen solcher Abstreifvorrichtungen wie zum Beispiel eine Abstreiflippe entsprechend der DE 38 17 391 oder Rippen wie in der DE 43 36 222 gezeigt sind damit ohne zusätzliche Teile oder Herstellschritte realisierbar. Es ist außerdem gewährleistet, dass die Verschleißteile wie zum Beispiel der Gleitkörper oder der Dämpfer der Gleitbacke bei Bedarf einfach und kostengünstig ausgewechselt werden können, da sie nur auf den Gleitbackenträger auf- beziehungsweise angesteckt sind. Es lassen sich ferner einheitliche Gleitkörper und Dämpfer realisieren, sodass diese für unterschiedliche Gleitbackenträger beziehungsweise Gleitbacken eines Herstellers verwendet werden können. Dies führt zu einer Vereinfachung der Produktionslandschaft und damit zur Kostenreduzierung.

Bei einer erfindungsgemäßen Gleitbacke können der Gleitkörper und der Dämpfer aus unterschiedlich elastischen Stoffen bestehen und der Dämpfer dabei elastischer als der Gleitkörper sein. Beispielsweise kann der Gleitkörper aus eher hartem Kunststoff und der Dämpfer aus weicherem Gummi bestehen. Alternativ kann der Dämpfer aufgrund seiner Form elastisch sein. Dabei kann er aus dem gleichen Material wie der Gleitkörper bestehen und zum Beispiel eine Kunststofffeder in einem Kunststoffgleitkörper sein und eventuell sogar in diesen integriert werden oder auch aus einem anderen Material wie beispielsweise Federstahl bestehen. Der Dämpfer kann in den Gleitkörper eingelegt oder eingesteckt werden, bevor dieser wiederum auf den Gleitbackenträger aufgesteckt wird, oder er wird selbst zuerst an dem Gleitbackenträger angebracht und danach mit einem aufzusteckenden Gleitkörper versehen. In einer weiteren bevorzugten Ausführungsform der Erfindung ist an den Gleitkörper eine Abstreifvorrichtung für Schmutz, Staub und angeformt. Es kann sich dabei beispielsweise um eine Abstreiflippe oder schräg verlaufenden Rippen mit den oben genannten Vorteilen handeln.

Weitere vorteilhafte Ausbildungen der Erfindung ergeben sich aus den Unteransprüchen

Im folgenden wird die Erfindung anhand der beigefügten Zeichnungen beispielhaft näher erläutert. Dabei zeigen:
Fig. 1 eine schematische Ansicht eines Schnittes quer zur Fahrtrichtung eines Fahrzeugs durch eine erfindungsgemäße Gleitbacke; und
Fig. 2 einen Schnitt entlang der Längsrichtung eines Fahrzeugs durch eine zweite Ausführungsform einer erfindungsgemäßen Gleitbacke.

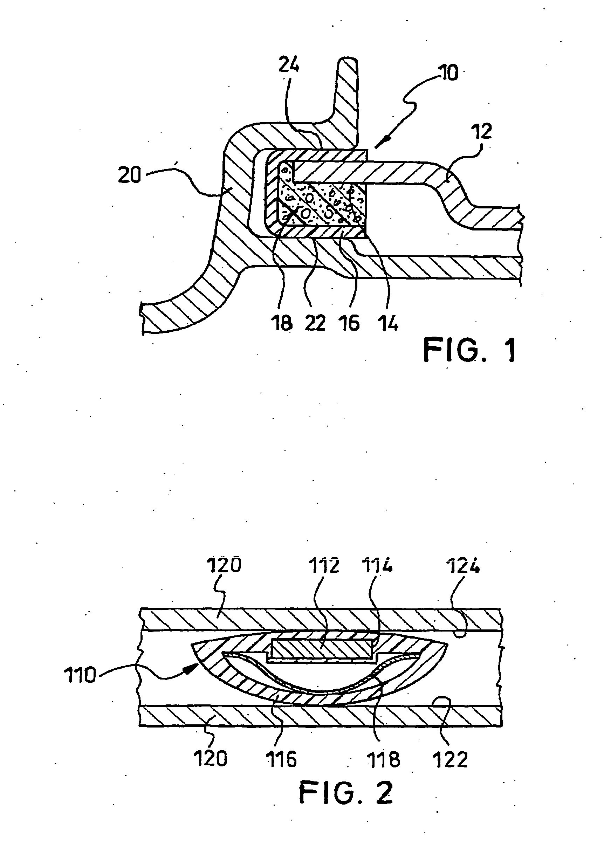

In Fig. 1 ist ein Schnitt quer zur Fahrtrichtung eines Fahrzeugs durch eine erfindungsgemäße Gleitbacke 10 gezeigt. Sie ist in der Führungsschiene 20 beweglich verschiebbar gelagert, wobei die Verschieberichtung entlang der Fahrzeugachse (also senkrecht zur Bildebene) verläuft und die Gleitbacke entlang den Gleitflächen 22 und 24 gleitet. Die Gleitbacke 10 beinhaltet einen Gleitbackenträger 12, der typischerweise aus einem Blech besteht und die Gleitbacke mit einer hier nicht gezeigten Kulisse eines Fahrzeugdeckels verbindet. Der Gleitbackenträger 12 greift in eine Aufnahmelasche 14 der Gleitbacke 10, welche sich im wesentlichen über einem Dämpfer 18 der Gleitbacke befindet. Zur Führungsschiene 20 hin ist die Gleitbacke 10 mit einem Gleitkörper 16 abgeschlossen. Die Materialien für den Gleitkörper 16 und den Dämpfer 18 sind dabei so gewählt, dass der Dämpfer eine größere Elastizität als der Gleitkörper aufweist. Dadurch, dass sich der Gleitbackenträger 12 beziehungsweise dessen Aufnahmelasche 14 über den Dämpfer 18 befindet, werden Belastungen des Fahrzeugdeckels nach unten durch den elastischen Dämpfer 18 abgefedert und auch Fertigungstoleranzen beziehungsweise unterschiedliche Wölbungen der Führungsschiene 20 können ausgeglichen werden. Da sich zwischen dem Gleitbackenträger 12 und der oberen Gleitfläche 24 kein weiches Dämpfungsmaterial befindet, kann der Gleitbackenträger 12 bei Belastungen nach oben, wie sie beispielsweise durch einen Unterdruck bei hohen Fahrgeschwindigkeiten auftreten, nicht ausweichen, da sich zwischen ihm und der Führungsschiene 20 im Bereich der Gleitfläche 24 nur der relativ harte Gleitkörper 16 befindet. Damit werden lästige Geräusche und Funktionsstörungen des Deckels vermieden, da dieser nicht über die Dachhaut nach oben gezogen werden kann. Da der Dämpfer 18 und der Gleitkörper 16 auf den Gleitbackenträger 12 aufgesteckt sind, können sie bei Verschleiß vergleichsweise einfach abgezogen und ersetzt werden. Gleitkörper 16 und Dämpfer 18 können ferner so ausgestaltet sein, dass sie als Einheitsbauteile für verschiedene Gleitbackenträger 12 eines Herstellers verwendet werden können, was die Fertigungsvielfalt und die damit verbundenen Kosten deutlich reduziert. Eine weitere vorteilhafte Ausgestaltung der Erfindung ergibt sich, wenn an dem Gleitkörper 16 Abstreifvorrichtungen angeformt werden. Es lassen sich beispielsweise im Bereich der Gleitflächen 22 und 24 des Gleitkörpers 16 relativ einfach schräg zur Fahrtrichtung verlaufende Rippen anformen, welche zum Abstreifen von Staub, Sand usw. dienen.

Fig. 2 zeigt eine alternative, erfindungsgemäße Ausführungsform einer Gleitbacke. Es ist dabei ein Schnitt entlang der Fahrzeuglängsachse durch eine Gleitbacke 110 dargestellt. Die Gleitbacke 110 besteht aus einem Gleitbackenträger 112, einer Aufnahmelasche 114 für den Gleitbackenträger, einem Gleitkörper 116 sowie einem Dämpfer 118. Im Unterschied zu der Ausführungsform von Fig. 1 ist hier der Dämpfer 118 nicht als relativ weiches Kunststoffelement ausgebildet, sondern besteht aus einer elastischen Stahlfeder. Auch diese ist wiederum unterhalb der Aufnahmelasche 114 angeordnet, sodass Belastungen des Gleitbackenträgers 112 nach unten elastisch abgefangen werden und umgekehrt ein vergleichsweise harter Anschlag des Gleitkörpers gegen eine obere Gleitfläche 124 einer Führungsschiene 120 gewährleistet ist. Auch bei dieser Ausführungsform besteht zusätzlich die Möglichkeit, den Gleitkörper 116, der auch hier vorzugsweise aus einem relativ harten Kunststoff besteht, mit einer Abstreifvorrichtung in Form einer Lippe oder von schräg verlaufenden Rippen auszugestalten. Die bei der Fig. 1 beschriebenen Vorteile der Erfindung gelten entsprechend auch bei der hier in Fig. 2 gezeigten Ausführungsform. Bei beiden Ausführungsformen von Fig. 1 und Fig. 2 kann der Dämpfer 18 beziehungsweise 118 bei der Montage zuerst in den Gleitkörper 16 beziehungsweise 116 eingesteckt oder eingelegt werden, bevor dann beide Elemente auf den Gleitbackenträger 12 beziehungsweise 112 aufgesteckt werden. Die Fixierung von Gleitkörper und Dämpfer auf dem Gleitbackenträger kann beispielsweise durch Verschrauben, Einrasten oder Reibung erfolgen.

### Bezugszeichenliste

- 10,110: Gleitbacke
- 12, 112: Gleitbackenträger
- 14, 114: Aufnahmelasche
- 16, 116: Gleitkörper
- 18, 118: Dämpfer
- 20, 120: Führungsschiene
- 22, 122: Gleitfläche
- 24, 124: Gleitfläche

## Patentansprüche

1. Gleitbacke (10, 110) für eine Führungsanordnung verstellbarer Fahrzeugteile, insbesondere Schiebedächer, Schiebehebedächer und dergleichen, mit einem Gleitbackenträger (12, 112), einer Aufnahmelasche (14, 114) für den Gleitbackenträger, einem Gleitkörper (16, 116) und einem Dämpfer (18, 118), der sich unterhalb der Aufnahmelasche befindet, **dadurch gekennzeichnet, dass** der Gleitkörper (16, 116) auf den Gleitbackenträger (12, 112) aufgesteckt ist.

2. Gleitbacke (10, 110) gemäß Anspruch 1, **dadurch gekennzeichnet, dass** der Gleitkörper (16, 116) und der Dämpfer (18, 118) aus unterschiedlich elastischen Stoffen bestehen und der Dämpfer dabei elastischer als der Gleitkörper ist.

3. Gleitbacke (10, 110) gemäß Anspruch 1, **dadurch gekennzeichnet, dass** der Dämpfer (18, 118) aufgrund seiner Formgebung elastische Eigenschaften aufweist.

4. Gleitbacke (10, 110) gemäß Anspruch 1, **dadurch gekennzeichnet, dass** der Dämpfer (18, 118) aus dem gleichen Material wie der Gleitkörper (16, 116) besteht.

5. Gleitbacke (10, 110) gemäß einem der Ansprüche 3 oder 4, **dadurch gekennzeichnet, dass** der Dämpfer (18, 118) an den Gleitkörper (16, 116) angeformt ist.

6. Gleitbacke (10, 110) gemäß Anspruch 3, **dadurch gekennzeichnet, dass** der Dämpfer (18, 118) eine Stahlfeder ist.

7. Gleitbacke (10, 110) gemäß einem der Ansprüche 1 bis 4 oder 6, **dadurch gekennzeichnet, dass** der Dämpfer (18, 118) in den Gleitkörper (16, 116) eingelegt oder eingesteckt ist.

8. Gleitbacke (10, 110) gemäß einem der Ansprüche 1 bis 4 oder 6, **dadurch gekennzeichnet, dass** der Dämpfer (18, 118) auf den Gleitbackenträger (12, 112) aufgesteckt ist.

9. Gleitbacke (10, 110) gemäß Anspruch 1 oder 2, **dadurch gekennzeichnet, dass** der Dämpfer (18, 118) an den Gleitbackenträger (12, 112) oder an den Gleitkörper (16, 116) angespritzt ist.

10. Gleitbacke (10, 110) gemäß einem der vorhergehenden Ansprüche, **dadurch gekennzeichnet, dass** an den Gleitkörper (16, 116) zumindest eine Abstreifvorrichtung angeformt ist.

11. Gleitbacke (10, 110) gemäß Anspruch 10, **dadurch gekennzeichnet, dass** die Abstreifvorrichtung eine Abstreiflippe ist.

12. Gleitbacke (10, 110) gemäß Anspruch 10, **dadurch gekennzeichnet, dass** die Abstreifvorrichtung aus schräg verlaufenden Rippen bestehen, die in eine Gleitfläche des Gleitkörpers integriert sind.

## Claims

1. Sliding shoe (10, 110) for a guide arrangement of adjustable vehicle parts, in particular sliding roofs, tilt-and-slide roofs and the like, with a sliding shoe carrier (12, 112), a receiving tab (14, 114) for the sliding shoe carrier, a sliding body (16, 116) and a damper (18, 118) which is located below the receiving tab, **characterized in that** the sliding body (16, 116) is plugged onto the sliding shoe carrier (12, 112).

2. Sliding shoe (10, 110) according to Claim 1, **characterized in that** the sliding body (16, 116) and the damper (18, 118) are composed of materials of different elasticity, and the damper is more elastic than the sliding body.

3. Sliding shoe (10, 110) according to Claim 1, **characterized in that** the damper (18, 118) has elastic properties on account of its shaping.

4. Sliding shoe (10, 110) according to Claim 1, **characterized in that** the damper (18, 118) is composed of the same material as the sliding body (16, 116).

5. Sliding shoe (10, 110) according to either of Claims 3 and 4, **characterized in that** the damper (18, 118) is integrally formed on the sliding body (16, 116).

6. Sliding shoe (10, 110) according to Claim 3, **characterized in that** the damper (18, 118) is a steel spring.

7. Sliding shoe (10, 110) according to one of Claims 1 to 4 or 6, **characterized in that** the damper (18, 118) is placed or plugged into the sliding body (16, 116).

8. Sliding shoe (10, 110) according to one of Claims 1 to 4 or 6, **characterized in that** the damper (18, 118) is plugged onto the sliding shoe carrier (12, 112).

9. Sliding shoe (10, 110) according to Claim 1 or 2, **characterized in that** the damper (18, 118) is injection-moulded onto the sliding shoe carrier (12, 112) or onto the sliding body (16, 116).

10. Sliding shoe (10, 110) according to one of the preceding claims, **characterized in that** at least one wiping device is integrally formed on the sliding body (16, 116).

11. Sliding shoe (10, 110) according to Claim 10, **characterized in that** the wiping device is a wiping lip.

12. Sliding shoe (10, 110) according to Claim 10, **characterized in that** the wiping device comprises ribs which run obliquely and are integrated in a sliding surface of the sliding body.

## Revendications

1. Patin (10, 110) pour un agencement de guidage de pièces de véhicule déplaçables, notamment de toits ouvrants, de toits ouvrants relevables et similaires, comprenant un support de patin (12, 112), une patte de réception (14, 114) pour le support de patin, un corps coulissant (16, 116) et un amortisseur (18, 118), qui se trouve sous la patte de réception, **caractérisé en ce que** le corps coulissant (16, 116) est enfilé sur le support de patin (12, 112).

2. Patin (10, 110) selon la revendication 1, **caractérisé en ce que** le corps coulissant (16, 116) et l'amortisseur (18, 118) se composent de matériaux d'élasticités différentes et l'amortisseur est en l'occurrence plus élastique que le corps coulissant.

3. Patin (10, 110) selon la revendication 1, **caractérisé en ce que** l'amortisseur (18, 118) présente des propriétés élastiques du fait de sa forme.

4. Patin (10, 110) selon la revendication 1, **caractérisé en ce que** l'amortisseur (18, 118) se compose du même matériau que le corps coulissant (16, 116).

5. Patin (10, 110) selon l'une quelconque des revendications 3 ou 4, **caractérisé en ce que** l'amortisseur (18, 118) est façonné sur le corps coulissant (16, 116).

6. Patin (10, 110) selon la revendication 3, **caractérisé en ce que** l'amortisseur (18, 118) est un ressort en acier.

7. Patin (10, 110) selon l'une quelconque des revendications 1 à 4 ou 6, **caractérisé en ce que** l'amortisseur (18, 118) est introduit ou enfoncé dans le corps coulissant (16, 116).

8. Patin (10, 110) selon l'une quelconque des revendications 1 à 4 ou 6, **caractérisé en ce que** l'amortisseur (18, 118) est enfilé sur le support de patin (12, 112).

9. Patin (10, 110) selon la revendication 1 ou 2, **caractérisé en ce que** l'amortisseur (18, 118) est moulé par injection sur le support de patin (12, 112) ou sur le corps coulissant (16, 116).

10. Patin (10, 110) selon l'une quelconque des revendications précédentes, **caractérisé en ce qu'**au moins un dispositif de raclage est façonné sur le corps coulissant (16, 116).

11. Patin (10, 110) selon la revendication 10, **caractérisé en ce que** le dispositif de raclage est une lèvre de raclage.

12. Patin (10, 110) selon la revendication 10, **caractérisé en ce que** le dispositif de raclage se compose de nervures s'étendant obliquement, qui sont intégrées dans une surface de glissement du corps coulissant.
